# EUROPÄISCHE PATENTANMELDUNG

(11) **EP 0 558 998 A1**
(43) Veröffentlichungstag der Anmeldung: **08.09.1993**
(21) Anmeldenummer: 93102463.2
(22) Anmeldetag: 17.02.1993
(51) Int. Cl.: C09D 7/12, C09D 175/06, C08J 7/04

(54) **Verfahren zur Lackierung von Kunststoffen**

(30) Priorität: 02.03.1992 DE 4206511
(71) Anmelder: BAYER AG, 51368 Leverkusen (DE)
(72) Erfinder: Sirinyan, Kirkor, Dr., W-5060 Bergisch Gladbach 2 (DE); Petzoldt, Joachim, Dr., W-4000 Düsseldorf 30 (DE); Henning, Wolfgang, Dr., SUMITOMO BAYER, Amagasaki, Hyogo Pref. (JP)

(57) **Zusammenfassung**

Ein Verfahren zur Lackierung von Kunststoffen unter Verwendung eines Beschichtungsmittels, welches ein Ein- oder Zweikomponenten-Bindemittel und einen Haftvermittler, bestehend aus einem chemisch modifizierten kristallinen, chlorfreien Polyolefin mit einer mittleren Molmasse von 1.000 bis 8.000, einer Uneinheitlichkeit von 1,0 bis 6,5 und einem Gehalt an Stickstoff, Sauerstoff, Schwefel und/oder Silicium in Form von chemisch eingebauten funktionellen Gruppen von insgesamt 1,5 bis 17,5 Gew.-%, enthält, die Verwendung von derartigen, chemisch modifizierten Polyolefinen als Haftvermittler in Beschichtungsmitteln der genannten Art für Kunststoffe und die gemäß dem genannten Verfahren lackierte Kunststoffe.

## Beschreibung

Die Erfindung betrifft ein neues Verfahren zur Lackierung von Kunststoffen unter Verwendung üblicher Ein- oder Zweikomponentenlacke, die als Haftvermittler bestimmte, chemisch modifizierte Polyolefine aufweisen, die Verwendung dieser chemisch modifizierten Polyolefine als Haftvermittler in Lacken der genannten Art, sowie die nach dem Verfahren lackierten Kunststoffe.

Zum Aufbringen von gut haftenden Lackauflagen auf Kunststoffen, insbesondere auf PP-(Polypropylen)-Spritzgrußteilen, ist eine chemische oder physikalische Modifizierung der Substratoberflächen erforderlich. In diesem Zusammenhang seien Beflammen (vergleiche beispielsweise F. Carbassi u.a., J. Mater Sci., 22, Seiten 207 bis 212 (1987)), Coronabehandeln (vergleiche beispielsweise F. Lawson, Rubber Chem. and Technol., 60, 102 (1987)), Plasmabehandeln (vergleiche beispielsweise L.H. Coopes et al J. Macromol. Chem. 17, Seiten 217 bis 226 (1982) und EP-A 0 282 094), Beizen mit Chromschwefelsaure (vergleiche beispielsweise M. Salkauskas J. Appl. Polym. Sci., 26, Seiten 2.079 bis 2.098 (1982)) erwähnt.

Ferner kann der Literatur entnommen werden, daß es möglich ist, durch Verwendung von Haftvermittlerauflagen auf Basis von chlorierten Polyolefinen (US-PS 3 676 391) oder MSA modifizierten Polyolefinen, insbesondere amorphen Polypropylen-Typen (DE-OS 1 546 982) Kunststoffteile auf Basis von Polypropylen und Polyethylenen haftfest lackierbar zu machen.

Diese Methoden sind entweder kostenintensiv oder bei Spritzgußteilen mit komplizierter Geometrie nicht anwendbar. Das Aufbringen von besagten Haftvermittlerauflagen ist neben den hohen Händlingskosten wegen der niedrigen Festkörpergehalts noch zusätzlich mit Umweltproblemen verbunden. Darüberhinaus ist ihre Anwendung auf bestimmte Lacksysteme beschränkt.

In der PCT-Anmeldung mit der Veröffentlichungsnummer WO 88/05346 wird vorgeschlagen, die Haftvermittlerauflagen mittels zusätzlicher Maßnahmen wie UV-Bestrahlung zu modifizieren, was auf einen zusätzlichen Aufwand hinausläuft.

Ein Beimengen von chlorierten Polyolefinen zu den Kunststofflacken, beispielsweise von herkömmlichen, chlorierten Polypropylenen, wie es in US-PS 2 468 480 empfohlen wird, ist mit dem Nachteil verbunden, daß solche chlorierte Polyolfine mit den üblichen Kunststofflacken nur schlecht verträglich sind. Ferner ist ihre Löslichkeit in üblichen Lacklösungsmitteln sehr gering, was die praktische Verarbeitbarkeit negativ beeinträchtigt.

In der DE-OS 1 546 982 wird empfohlen, chemisch modifiziertes, amorphes Polyolefin als Primer zu verwenden. Die Verwendung der in der Vorveröffentlichung für diesen Zweck vorgeschlagenen Verbindungen als den Beschichtungsmitteln zuzusetzende Haftvermittler ist wegen ihrer Unverträglichkeit mit den herkömmlichen Bindemitteln nicht möglich.

In DE-OS 3 909 217 beziehungsweise 3 939 760 wird empfohlen, Beschichtungsmittel, die mindestens einen Haftvermittler auf der Basis von chlorhaltigen, chemisch modifizierten amorphen Polyolefinen mit funktionellen Gruppen enthalten, zum direkten Lackieren von Kunststoff-Spritzgußteilen zu verwenden.

Aus ökologischen Gründen gewinnen jedoch chlorfreie Systeme immer mehr an Bedeutung.

Es war daher die der Erfindung zugrundeliegenden Aufgabe, ein neues System zur direkten, haftfesten Lackierung von Kunststoffen zur Verfügung zu stellen, welches sich aufgrund der Verwendung von neuartigen, chlorfreien Haftvermittlern zur Herstellung von hochwertigen Lacküberzügen eignet, ohne mit den Nachteilen der genannten Verfahren des Standes der Technik behaftet zu sein, wobei die Haftvermittler sedimentstabil in die Lacke eingearbeitet werden können.

Diese Aufgabe konnte mit der Bereitstellung des nachstehenden näher beschriebenen erfindungsgemäßen Verfahrens beziehungsweise mit der erfindungsgemäßen Verwendung von bestimmten, nachstehend näher beschriebenen chemisch modifizierten Polyolefinen als Haftvermittler gelöst werden.

Gegenstand der Erfindung ist ein Verfahren zur Lackierung von Kunststoffen unter Verwendung eines Beschichtungsmittels, welches neben einem Ein- oder Zweikomponenten-Bindemittel, sowie gegebenenfalls sonstigen Hilfs- und Zusatzmitteln einen Haftvermittler enthält, dadurch gekennzeichnet, daß der Haftvermittler ein chemisch modifiziertes kristallines, chlorfreies Polyolefin ist, welches eine mittlere Molmasse von 1.000 bis 8.000 g/Mol, eine Uneinheitlichkeit von 1,0 bis 6,5 und einen Gehalt an Stickstoff, Sauerstoff, Schwefel und/oder Silicium in Form von chemisch eingebauten funktionellen Gruppen von insgesamt 1,5 bis 17,5 Gew.-% aufweist.

Gegenstand der Erfindung ist auch die Verwendung von chemisch modifiziertem, kristallinem, chlorfreiem Polyolefin, welches eine mittlere Molmasse von 1.000 bis 8.000 g/Mol, eine Uneinheitlichkeit von 1,0 bis 6,5 und einen Gehalt an Stickstoff, Sauerstoff, Schwefel und/oder Silicium in Form von chemisch eingebauten funktionellen Gruppen von insgesamt 1,5 bis 17,5 Gew.-% aufweist, als Haftvermittler in Beschichtungsmitteln für Kunststoffe auf Basis von ein- oder zweikomponentigen Bindemitteln.

Gegenstand der Erfindung sind schließlich auch die nach dem erfindungsgemäßen Verfahren lackierten Kunststoffe.

Bei den erfindungsgemäßen Haftvermittlern handelt es sich vorzugsweise um chemisch modifizierte, kristalline, taktische Polyolefine mit einer mittleren, gelpermeationschromatographisch ermittelten Molmasse Mw 1.000 bis 8.000, vorzugsweise 3.000 bis 6.000 und besonders bevorzugt 4.000 bis 5.000 g/Mol, mit einer Uneinheitlichkeit 1,0 bis 6,5, vorzugsweise 1,5 bis 4,5 und einem Gehalt an Stickstoff, Sauerstoff, Schwefel und/oder Silicium in Form von eingebauten funktionellen Gruppen von insgesamt 1,5 bis 17,5, vorzugsweise 2 bis 10 Gew.-%.

Die Bezeichnung "kristallin" bedeutet, daß der kristalline Anteil der die Grundlage der Haftvermittler bildenden Polyolefine bei mindestens 50 Gew.-% liegt. Auch die bevorzugten, erfindungsgemäß zu lackierenden Substrate stellen "kristalline" Kunststoffe dar, auch in diesem Fall soll der Begriff "kristallin" besagen, daß der kristalline Anteil der Kunststoffe bei mindestens 50 Gew.-% liegt.

Gut geeignete funktionelle Gruppen sind beispielsweise Carboxyl-, Carbonsäureanhydrid-, Carbonsäureester-, Carbonsäureamid-, Carbonsäureimid, Aldehyd-, Keton-, Sulfonsäureester-, Hydroxy-, Hydroperoxid-, Amino- oder Alkoxysilangruppen oder auch heterocyclische Gruppierungen wie Imidazol-, Carbazol-, oder Pyridinylgruppen oder schließlich auch aktivierte Doppelbindungen wie Vinylsulfonyl- oder Vinylamidogruppen, sowie schließlich auch Mercaptogruppen. Ganz besonders gut geeignete funktionelle Gruppen sind Hydroxyl-, Hydroperoxid-(H-O-O-), Carboxyl-, Carbonsäureanhydrid-, Carbonsäureamid-, Carbonsäureamidimid-, Carbonsäureester, Amino- und Alkoxysilan-, vorzugsweise Trimethoxysilangruppen.

Zu den besonders bevorzugten funktionellen Gruppen gehören Carbonsäureanhydrid-, -imid-, -ester- und -amidgruppen, insbesondere solche, die durch Umsetzung von eingebauten Carbonsäureanhydridgruppen mit monofunktionellen aliphatischen Alkoholen unter gegebenenfalls anschließender Umsetzung mit Epoxiden oder mit monofunktionellen Aminen entstehen.

Zur Herstellung der chemisch modifizierten Haftvermittler werden als Ausgangsmaterialien vorzugsweise taktische Polypropylene eingesetzt. Es ist jedoch auch möglich, als "Polyolefine" entsprechende Copolymerisate des Propylens mit anderen olefinisch ungesättigten Monomeren wie beispielsweise Ethylen, Isopren, oder kristalline Polyethylene der genannten Molmasse-und Uneinheitlichkeits-Bereiche einzusetzen, wobei bei der Herstellung der genannten Copolymerisate des Propylens die Comonomeren vorzugsweise in Mengen von 0 bis zu 25 Gew.-% bezogen auf das Gewicht aller Monomeren zum Einsatz gelangen.

Der Einbau der funktionellen Gruppen kann durch Umsetzung mit herkömmlichen Peroxiden (Einbau von Hydroperoxid- oder Carboxygruppen) beziehungsweise durch radikalisch initiierte Pfropfreaktionen mit Monomeren, die erfindungsgemäß funktionelle Gruppen aufweisen, vorgenommen werden. Als Initiator für die Pfropfreaktionen können Peroxide oder Azoverbindungen der hierfür an sich bekannten Art verwendet werden. Die Modifizierungsreaktionen sind an sich bekannt und werden beispielsweise in folgenden Literaturstellen beschrieben: G.A. Russel, J.Am.Chem.Soc., 79 3871 (1957), M. Iring et al., Polymer Degradation and Stability, 5, 467 (1983), N.G. Gaylord, Journal of Polymer Science, Polymer Letters Edition, Vol, 21, 23-30 (1983), A. Neyishi et al., J. of Appl. Poly Sci. 22, 2953 (1978), A. Hoff, J. of Appl. Poly Sci., 29, 465 (1984).

Geeignete Initiatoren sind beispielsweise Kaliumperoxodisulfat, Azo-bisisobutyronitril, t-Butylperbenzoat, t-Amyl-perneodecanoat, p-Benzodinen, t-Butyl-perisononanoat, Di-2-ethylhexyl-peroxydicarbonat oder Di-n-butyl-peroxydicarbonat.

Geeignete Monomere mit funktionellen Gruppen wären beispielsweise Allylamin, Allylalkohol, Trimethoxyvinylsilan, Triethoxyvinylsilan, Ethylallylether, Tetrahydrophthalsäureanhydrid, Maleinsäureanhydrid, Dialkylester der Maleinsäure wie beispielsweise Maleinsäuredimethyl-, -diethyl-, -diisopropyl- oder -di-n-butylester oder Maleinsäureamide wie beispielsweise Maleinsäure-bis-diethylamid, Maleinsäureimide wie beispielsweise n-Propyl- oder n-Butyl-maleinsäureimid, Fumarsäure, den genannten Maleinsäureestern entsprechend Fumarsäureester, den genannten Maleinsäureamiden entsprechende Fumarsäureamide, 3-Trimethoxysilyl-1-chloropropan, N[2(Trimethoxysilyl)ethyl]-ethylendiamin, 3-Trimethoxysilyl-1-chloropropan, Mercaptoethyl-, Mercaptopropyl-, Mercaptobutyltrimethoxy- bzw. -triethoxysilan, ferner Vinylcarbonat, Vinylsulfon, 3-Trimethoxysilylpropyl-1-imidazol beziehungsweise -carbazol. Die geeigneten Monomeren sind im allgemeinen solche, die mit den Polyolefinen nicht zu Blockcopolymerisaten reagieren. Wie der Aufzählung geeigneter Monomerer mit funktionellen Gruppen zu entnehmen, ist es nicht unbedingt erforderlich, daß die Monomeren olefinisch ungesättigt sind; es ist für die Eignung der Monomeren vielmehr ausreichend, wenn sie unter den nachstehend näher genannten Bedingungen der Modifizierungsreaktion in die als Pfropfgrundlage dienenden taktischen Olefine eingebaut werden, was beispielsweise auch nach dem Prinzip einer Kondensationsreaktion (Abspaltung von Chlorwasserstoff) erfolgen kann.

Erfindungsgemäß bevorzugte Haftvermittler sind solche auf Basis von taktischem Polypropylen, die Sauerstoff und gegebenenfalls Stickstoff in Form der bereits obengenannten bevorzugten Gruppierungen enthalten. Zur Herstellung derartiger Haftvermittler erfolgt die Modifizierungsreaktion vorzugsweise unter Verwendung von Maleinsäureanhydrid, Fumarsäure, Alkylmaleinsäureimiden wie z.B. n-Butyl-maleinsäureimid oder C₁-C₄-Alkylester der Acrylsäure beziehungsweise Methacrylsäure als Monomere. Die ebenfalls besonders bevorzugten Haftvermittler sind solche, die modifizierte, eingebaute Säureanhydridgruppen enthalten, das heißt, bei deren Herstellung zunächst der Einbau von Säureanhydridgruppen, beispielsweise mittels Maleinsäureanhydrid erfolgte, die anschließend mit einwertigen aliphatischen Alkoholen oder Aminen modifiziert werden, wobei im ersten Fall nach der ringöffnenden Esterbildung durch Umsetzung der Anhydridgruppen mit den alkoholischen Hydroxylgruppen gegebenenfalls eine Umsetzung der entstandenen Carboxylgruppen mit Epoxiden wie z.B. 1,2-Epoxyhexan stattfinden kann. Für diese Modifizierungsreaktion geeignete Alkohole beziehungsweise Amine sind beispielsweise 1-Butanol, 1-Hexanol, höhere Fettalkohole mit bis zu 18 Kohlenstoffatomen, 1-Butylamin, 1-Dodecylamin oder 1-Octadecylamin.

Der Einbau von funktionellen Gruppen kann sowohl in der Schmelze mittels Extrudern oder anderen üblichen Spritzgußtechniken bei Temperaturen von ca. 140°C bis 300°C, vorzugsweise jedoch bei Temperaturen oberhalb des Schmelzbereiches der jeweils eingesetzten Polyolefine (vergleiche hierzu G.M. Gale, Applied Organometallic Chemistry, 2, Seiten 17-31 (1988) oder in einem geeigneten Lösungsmittel (vergleiche hierzu DE-OS 1 546 982) vorgenommen werden. Zum Einbau von funktionellen Gruppen in Lösung wird die Pfropfreaktion im allgemeinen bei erhöhten Temperaturen von ca. 40°C bis zum, jeweiligen Siedepunkt des Lösungsmittels vorgenommen. Geeignete Lösungsmittel sind beispielsweise Xylol, Tetrachlorkohlenstoff, Toluol, Chlorbenzol, Tetralin, Kresol oder Gemische derartiger Lösungsmittel.

Die erfindungswesentlichen Haftvermittler werden in den erfindungsgemäß zu verwendenden Beschichtungsmitteln in Mengen 2,5 bis 55, vorzugsweise 20 bis 45 Gew.-%, bezogen auf das Gewicht des Bindemittels eingesetzt.

Beim erfindungsgemäßen Verfahren einzusetzenden Beschichtungsmitteln handelt es sich um solche, die übliche Ein- oder Zweikomponenten-Bindemittel der aus der Lacktechnologie bekannten Art enthaltend. Geeignete Bindemittel sind beispielsweise Ein- oder Zweikomponenten-Polyurethansysteme, Epoxidharze (siehe beispielsweise M.Lee, Handbook of Epoxy Resins, Mc Graw-Hill Book Company New York (1967)), Alkydharze, Melaminharze, gesättigte oder ungesättigte Polyesterharze, mittels Bestrahlung oder thermischer Behandlung oder mittels Radikal-Initiatoren vernetzbare Acrylatsysteme, 2K-OH-funktionelle Acrylat-Polyurethansysteme, thermoplastische Polyacrylate wie Polymethylmethacrylat, Nitrocellulose, Kautschuktypen oder Polyamidharze. Grundsätzlich möglich ist auch die Verwendung von Bindemittelgemischen, die mehr als ein Bindemitteltyp der genannten Art enthalten.

Bei den erfindungsgemäß zu verwendenden Beschichtungsmitteln handelt es sich vorzugsweise um lösungsmittelhaltige Lacke, die die üblichen Lacklösungsmittel wie beispielsweise Butylacetat, Methylethylketon, Methylisobutylketon, Methoxypropylacetat, Toluol, Xylol oder beliebige Gemische derartiger Lösungsmittel enthalten. Grundsätzlich geeignet ist jedoch auch die Verwendung von lösungsmittelarmen oder lösungsmittelfreien beziehungsweise von wäßrigen Beschichtungsmitteln, in denen die erfindungswesentlichen Haftvermittler in den oben genannten Mengen vorliegen. Geeignete Beschichtungsmittel sind beispielsweise in H. Kittel, Lehrbuch der Lacke und Beschichtungen, Band IV, Seiten 76 bis 306, Verlag W.A. Colomb (1986) oder in dem gleichen Lehrbuch, Ausgabe 1976, Band IV, Seiten 328 bis 358 beschrieben.

Besonders bevorzugt handelt es sich bei den Beschichtungsmitteln um Ein- und insbesondere Zweikomponenten-Polyurethansysteme der an sich bekannten Art.

Geeignete Einkomponenten-Polyurethanlacke sind beispielsweise solche, die als Bindemittel an sich bekannte, freie Isocyanatgruppen aufweisende Prepolymere enthalten, die unter dem Einfluß von Luftfeuchtigkeit aushärten. Die Verwendung derartiger Einkomponenten-Polyurethanlacke ist jedoch weniger bevorzugt.

Zu den bevorzugten Einkomponenten-Polyurethanlacken gehören jedoch solche auf Basis von überwiegend linearen, voll ausreagierten Polyurethanen, die in organischen Lacklösungsmitteln der beispielhaft genannten Art löslich sind und physikalisch trocknen (siehe z.B. Kunststoff-Handbuch, Band 7 "Polyurethane", herausgegeben von Günther Oertel, Carl-Hanser-Verlag München/Wien (1983), Seite 551). Geeignete physikalisch trockene Lacke dieses Typs sind beispielsweise jene, deren Binder auf einem ausreagierten linearen Polyurethan aus (i) einem Polyesterdiol, (ii) einem Kettenverlängerungsmittel und (iii) einem Diisocyanat basieren. Geeignete Polyesterdiole (i) zur Herstellung solcher Polyurethane sind beispielsweise Adipinsäure-Alkandiol-Polyesterdiole des Molekulargewichtsbereichs 600 bis 3.000. Bei den Alkandiolen handelt es sich beispielsweise um Butandiol-1,4, Hexandiol-1,6, Neopentyglykol oder Mischungen derartiger Glykole. Geeignete Kettenverlängerungsmittel (ii) sind beispielsweise Diole der zur Herstellung der Polyesterdiolen eingesetzten Art und auch Diamine wie Hexamethylendiamin oder Isophorondiamin. Geeignete Diisocyanate (iii) sind z.B. 2,4-Diisocyanatotoluol, 1,6-Diisocyanatohexan oder 4,4'-Diisocyanatodicyclohexylmethan. Die Polyurethane werden in an sich bekannter Weise hergestellt, wobei ein Äquivalentverhältnis von Isocyanatgruppen zu Hydroxylgruppen zu ca. 0,9:1 bis 1,1:1 eingehalten wird.

Erfindungsgemäß besonders bevorzugte Polyurethanlacke sind solche, die physikalisch trocknende, vorwiegend lineare Polyurethane als wesentliche Bindemittelkomponente und daneben Polyisocyanate als Vernetzer enthalten. Geeignete Polyisocyanate sind insbesondere die nachstehend näher beschriebenen Lackpolyisocyanate. In diesem bevorzugten Polyurethan-Bindemitteln liegen die als Vernetzer mit verwendeten Polyisocyanate im allgemeinen in Mengen von 2 bis 30, vorzugsweise 7,5 bis 15 und besonders bevorzugt 8 bis 12 Gew.-%, bezogen auf das Gesamtgewicht aller Bindemittelkomponenten inklusive den Vernetzern, vor.

Zu den ganz bevorzugten, erfindungsgemäß zu verwendenden Beschichtungsmitteln gehören die klassischen Zweikomponenten-Polyurethanlacke, deren Bindemittel aus einer Polyolkomponente, einer Polyisocyanatkomponente im molaren NCO/OH-Verhältnis von 0,5:1 bis2:1, vorzugsweise 0,8:1 bis 1,5:1 besteht.

Geeignete Polyisocyanate für diese 2K-Lacke sind die an sich bekannten Lackpolyisocyanate, das heißt insbesondere (i) Biuret-, (ii) Isocyanurat- und gegebenenfalls zusätzlich Uretdion- oder (iii) Urethan-und/oder Allophanat-modifizierte Lackpolyisocyanate auf Basis einfacher Diisocyanate wie 2,4-Diisocyanatetoluol und- insbesondere 1,6-Diisocyanatohexan. Diese Lackpolyisocyanate weisen im allgemeinen einen NCO-Gehalt von 10 bis 25 Gew.-% und einen Gehalt an monomeren Diisocyanaten von unter 0,5 Gew.-% auf.

Geeignete Polyhydroxylverbindungen sind insbesondere Polyesterpolyole, Polyetherpolyole oder Polyacrylatpolyole.

Die Polyesterpolyole haben im allgemeinen ein Molekulargewicht von 500 bis 5.000 und weisen mindestens 2, vorzugsweise 2 bis 6 Hydroxylgruppen pro Molekül auf.

Die Polyetherpolyole haben im allgemeinen ein Molekulargewicht von 500 bis 5.000 und weisen 2 bis 3 Hydroxylgruppen pro Molekül auf.

Die Acrylatpolyole haben ein Molekulargewicht von 500 bis 5.000 und enthalten im allgemeinen 1 bis 12 Gew.-% Hydroxylgruppen.

Geeignete Bindemittelkomponenten für Zweikomponenten-Polyurethanlacke der hier diskutierten Art sind beispielsweise auch in dem zuletzt zitierten Kunststoff-Handbuch auf Seiten 541 bis 544 beschrieben.

Die erfindungsgemäß zur Anwendung gelangenden Beschichtungsmittel können im übrigen weitere Hilfs- und Zusatzmittel wie Katalysatoren, Pigmente, die bereits erwähnten Losungsmittel, Verlaufshilfsmittel, Füllstoffe usw. enthalten.

Die Hilfs- und Zusatzmittel, inbesondere die erfindungsgemäßen Haftvermittler, werden im Falle der Verwendung in Zweikomponenten-Polyurethanlacken im allgemeinen der Polyolkomponente zugemischt.

Die Beschichtungsmittel, die die erfindungswesentlichen Haftvermittler enthalten, eignen sich ausgezeichnet zur Beschichtung von thermoplastischen oder duroplastischen Kunststoffen der unterschiedlichsten Art. Sie eignen sich besonders zur Beschichtung von oftmals nicht ohne weiteres haftfest lackierbaren Polyolefinen einer Oberflächenspannung von < 36 mN/m. Solche Polyolefine sind beispielsweise gegebenenfalls modifizierte kristalline Polypropylene und Polyethylene. Besonders bevorzugte Substrate für die erfindungsgemäßen Beschichtungsmittel sind Formkörper aus Polypropylen oder aus Kunststoff-Blends aus Polypropylen und Dien-Copolymerisaten wie insbesondere Ethylen-Propylen-Norbornadien-Copolymerisate ("EPDM-modifiziertes Polypropylen"). Entsprechende Kunststoff-Blends auf Basis von Polyethylenen sind ebenfalls gut geeignet. Außerdem sind als mögliche Substrate beispielhaft zu nennen: Polyvinylidenfluorid, Acrylnitril-Butadien-Styrol-Copolymerisate, Polycarbonate, Polyamidkunststoffe, Polyester-, Polybutadien-, Polysilikone oder Celluloseester. Die mit den erfindungswesentlichen Zusätzen versehenen Beschichtungsmittel werden bei der Durchführung des erfindungsgemäßen Verfahrens im allgemeinen unter Einhaltung einer Trockenfilmstärke von 0,5 bis 100, vorzugsweise 20 bis 50 µm appliziert, wobei beliebige Methoden der Kunststofflackierung zur Anwendung gelangen können. Sie zeichnen sich durch ihre hervorragende Lösemittelstabilität aus.

Im Falle einer Mehrschichtlackierung enthält selbstverständlich der Grundlack das erfindungswesentliche Additiv, während die Verwendung gleicher oder analoger Additive in den übrigen Lackschichten fakultativ ist. Hiermit kann jedoch eine verbesserte Lackzwischenhaftung erzielt werden, Auch den nicht unmittelbar mit dem zu beschichtenden Kunststoff in Berührung kommenden Lackschichten werden in einem solchen Falle die Haftvermittler in den oben angegebenen Mengen zugesetzt.

Die erfindungsgemäß lackierten Kunststoffe können in den unterschiedlichsten Bereichen des täglichen Bedarfs zur Anwendung gelangen. Beispielhaft genannt seien der Automobilinnen- und -außenbereich, Elektro- und Elektronikgeräte, sowie Haushaltsgeräte der unterschiedlichsten Art.

### Beispiel 1

100 g völlig kristallines Polypropylen mit der mittleren Molmasse M_{w} 6.500 g/Mol, welches 5 Gew.-% an eingebauten Maleinsäureanhydrid-Gruppen (MSA-Gruppen) enthält, werden bei 140°C in 675 g Xylol gelöst und heiß abfiltriert. Anschließend werden der Lösung 3,7 g n-Butanol bei 140°C unter N₂ zugetropft und 4 h bei 140°C unter N₂ gerührt. Nun wird die Lösung mit 5 g 1,2-Epoxyhexan versetzt und weitere 30 Minuten bei 140°C unter N₂ gerührt. Das so hergestellte Additiv enthält 3,7 Gew.-% Sauerstoff in Form von funktionellen Gruppen (überwiegend Carbonsäureestergruppen).

Zur Herstellung eines erfindungsgemäß einzusetzenden Einkomponenten-Polyurethanlacks wird die so hergestellte Additivlösung mit 560 g einer 40-Gew.-%igen Lösung eines ausreagierten, linearen Polyurethans (®Desmolack 4340, Hersteller: Bayer AG, D-5090 Leverkusen) in n-Butanol/Toluol (1:1) im Verlauf von einer Stunde unter N₂ zugetropft und unter Rühren auf 20°C abgekühlt.

Eine 100 x 100 mm große, handelsübliche, EPDM-modifizierte Polypropylenplatte der Fa. Hoechst AG, D-6230 Frankfurt/Main, des Typs ®Hostalen PPN 8018 wird durch Abblasen mit ionisierter Luft entladen, von Staubpartikeln befreit und dann mittels Spritzauftrag mit der beschriebenen Lacklösung, der vorab noch 30 g eines handelsüblichen Biuretpolyisocyanats auf Basis von Hexamethylendiisocyanat (®Desmodur N 100, Hersteller: Bayer AG) zugesetzt worden sind, beschichtet und bei 80°C im Verlaufe von 30 Minuten im Trockenschrank getrocknet. Die Trockenfilmstärke liegt bei ca. 25 µm.

Es resultiert eine Beschichtung mit der Lackhaftung gemäß DIN 53 151 Gt 0 (sehr gut).

### Vergleichsbeispiel 1

Eine Wiederholung von Beispiel 1 ohne Verwendung des erfindungswesentlichen Haftvermittlers führt zu einer Lackauflage mit einem Haftwert gemäß DIN 53 151 von Gt 5 (sehr schlecht). Die Lackauflage kann problemlos von der Oberfläche entfernt werden.

### Beispiel 2

100 g kristallines Polypropylen mit der mittleren Molmasse M_{w} 7.500 g/Mol und einem Kristallisitätsgrad von 83 Gew.-%, welches 4 Gew.-% eingebaute MSA-Gruppen enthält, werden bei 140°C in 675 g Xylol gelöst und heiß abfiltriert.

Anschließend wird die Lösung mit 13,76 g n-Octadecylamin versetzt und 4 h bei 140°C unter N₂ gerührt. Das so in gelöster Form anfallende erfindungsgemäße Additiv enthält 1,4 Gew.-% Sauerstoff und 0,6 Gew.-% Stickstoff in Form von funktionellen Gruppen.

Der auf diese Weise hergestellten Additivlösung werden 560 g der in Beispiel 1 beschriebenen Lösung des linearen Polyurethans im Verlauf von einer Stunde unter N₂ zugetropft und unter Rühren auf 20°C abgekühlt.

Man bekommt eine sedimentstabile Lacklösung, die sich zum haftfesten Lackieren von Kunststoff-Spritzgußteilen hervorragend eignet.

Eine 100 x 100 mm große, handelsübliche Dien-modifizierte Polypropylenplatte der Fa. DSM AG, NL-6411 Heerlen, des Typs ®Keltan 0550 wird durch Abblasen mit ionisierter Luft entladen, von Staubpartikeln befreit und dann mittels Spritzauftrag mit dem modifizierten Einkomponenten-Polyurethanlack beschichtet (Trockenfilmstärke ca. 30 µm).

Nach der Applikation des Lacks wird während 10 Minuten abgelüftet und bei 70°C getrocknet.

Es resultiert eine Beschichtung mit der Lackhaftung gemäß DIN 53 151 Gt 0.

### Beispiel 3

Eine 100 x 100 mm große handelsübliche modifizierte Polypropylenplatte nach Beispiel 2 wird durch Abblasen mit ionisierter Luft entladen, von Staubpartikeln befreit und dann mittels Spritzgauftrag mit einem erfindungsgemäß modifizierten Zweikomponenten-Polyurethanlack beschichtet.

Die Komponente I des Beschichtungsmittels besteht aus einem Gemisch aus
- 95 Gew.-Teilen: eines Hydroxylgruppen aufweisenden Polyacrylharzes mit einem Hydroxylgruppengehalt von 2,5 Gew.-% (®Desmophen A 365 der Bayer AG, D-5090 Leverkusen),
- 25 Gew.-Teilen: der xylolischen Haftvermittlerlösung gemäß Beispiel 1,
- 49,3 Gew.-Teilen: Talkum,
- 3,2 Gew.-Teilen: Schwarzpigment (Ruß),
- 65,6 Gew.-Teilen: Titandioxidpigment (Rutil),
- 4,8 Gew.-Teilen: einer 10%igen Lösung in Xylol eines handelsüblichen Schwebemittels (®Bentone 38 der Fa. Kronos Titan GmbH, D-5090 Leverkusen) und
- 155 Gew.-Teilen: eines Lösungsmittels, bestehend aus einem Gemisch aus Butylacetat und Xylol im Gewichtsverhältnis 1:1.

Die Komponente II des Beschichtungsmittels besteht aus einer 75%igen Lösung in 1-Methoxypropylacetat/Xylol (1:1) eines Biuretpolyisocyanats auf Basis von 1,6-Diisocyanatohexan mit einem NCO-Gehalt der Lösung von 16,5 Gew.-% (®Desmodur N 75 der Bayer AG).

Die Menge der Komponenten I und II entspricht einem NCO/OH-Äquivalentverhältnis von 1:1.

Nach erfolgter Applikation des Lacks wird während 10 Minuten abgelüftet und bei 70°C getrocknet. Die Trockenfilmstärke liegt bei ca. 25 µm.

Es resultiert eine Beschichtung mit der Lackhaftung gemäß DIN 53 151 Gt 0.

### Vergleichsbeispiel 3

Eine Wiederholung von Beispiel 3 ohne Verwendung des erfindungsgemäßen Haftvermittlers führt zu einer Lackauflage mit einem Haftwert gemäß DIN 53 151 von Gt 5. Die Lackauflage kann problemlos von der Oberfläche entfernt werden.

### Beispiel 4

100 g kristallines Polypropylen mit der mittleren Molmasse M_{w} 4.300 g/Mol und einem Kristallisitätsgrad von 90 Gew.-%, welches 5 Gew.-% eingebaute MSA-Gruppen enthält (entsprechend 2,4 Gew.-% Sauerstoff in Form von eingebauten funktionellen Gruppen), werden bei 140°C in 675 g Xylol gelöst und heiß abfiltriert.

Anschließend wird die so erhaltene Lösung im Verlauf von einer Stunde unter N₂ zu 565 g der in Beispiel 1 beschriebenen Lösung eines linearen Polyurethans getropft, woraus sich ein 5-stündiges Rühren des Gemischs bei 140°C unter N₂ anschließt. Anschließend wird unter weiterem Rühren auf Raumtemperatur gekühlt. Die so erhaltene Lösung wird schließlich 40 g eines handelsüblichen, isocyanuratgruppenaufweisenden Polyisocyanats auf Basis von Hexamethylendiisocyanat (®Desmodur N 3200, Hersteller: Bayer AG) beigemengt.

Eine Polypropylenplatte gemäß Beispiel 2 wird schließlich mit den so hergestellten Polyurethanlack per Spritzauftrag beschichtet, nach der Applikation des Lackes wird während 10 Minuten abgelüftet und bei 80°C getrocknet. Man bekommt einen benetzungsstörungsfreien Film der Trockenfilmstärke von ca. 25 µm.

Es resultiert eine Beschichtung mit der Lackhaftung gemäß DIN 53 151 Gt 0.

### Beispiel 5

Eine unvorbehandelte Polypropylenplatte des Typs ®Keltan TP 0550 der Fa. DSM wird mit einer Lacklösung bestehend aus
Gew.-Teile
- 53,9: erfindungsgemäßen Haftvermittler enthaltender Lösung eines linearen Polyurethans gemäß Beispiel 1
- 10,1: Titandioxidpigment des Typs Bayertitan R-KB-2 der Bayer AG
- 1,8: der in Beispiel 3 genannten Polyisocyanatlösung
- 3,6: Talkum IT extra der Fa. A/S Norwegian Talc, D-6232 Bad Soden
- 3,6: Millicarb, ein Füllstoff auf Schwerspatbasis, der Fa. Omya, 5000 Köln
- 3,0: ®Efwekoschwarz, 20%ige Ruß-Formulierung der Fa. Degussa AG, 6000 Frankfurt/Main
- 2,1: ®Bentone 38, ein Antiabsetzmittel mit thixotropierender Wirkung der Fa. Kronos Titan GmbH
- 21,9: Lösungsmittelgemisch auf Basis Xylol-Butylacetat/n-Butanol (3:2:1)
bei Raumtemperatur beschichtet und anschließend in Verlaufe von 30 Minuten bei 80°C getrocknet.

Man bekommt eine haftfest grundierte Platte mit der Lackhaftung gemäß DIN 53 151 Gt 0. Diese Grundierung ist mit herkömmlichen 2K-PUR-Lacken problemlos überlackierbar bzw. benetzungsstörungsfrei. Ihre Trockenfilmstärke liegt bei ca. 20 µm.

## Patentansprüche

1. Verfahren zur Lackierung von Kunststoffen unter Verwendung eines Beschichtungsmittels, welches neben einem Ein- oder Zweikomponenten-Bindemittel, sowie gegebenenfalls sonstigen Hilfs- und Zusatzmitteln einen Haftvermittler enthält, dadurch gekennzeichnet, daß der Haftvermittler ein chemisch modifiziertes kristallines, chlorfreies Polyolefin ist, welches eine mittlere Molmasse von 1.000 bis 8.000 g/Mol, eine Uneinheitlichkeit von 1,0 bis 6,5 und einen Gehalt an Stickstoff, Sauerstoff, Schwefel und/oder Silicium in Form von chemisch eingebauten funktionellen Gruppen von insgesamt 1,5 bis 17,5 Gew.-% aufweist.

2. Verfahren gemäß Anspruch 1, dadurch gekennzeichnet, daß der Haftvermittler Sauerstoff und gegebenenfalls Stickstoff in Form von eingebauten Carbonsäureanhydrid-, -imid-, -ester- oder -amidgruppen aufweist.

3. Verfahren gemäß Anspruch 2, dadurch gekennzeichnet, daß der Haftvermittler Sauerstoff und gegebenenfalls Stickstoff in Form von mit monofunktionellen aliphatischen Alkoholen und gegebenenfalls zusätzlich Epoxiden oder mit monofunktionellen Aminen modifizierten, eingebauten Carbonsäureanhydridgruppen aufweist.

4. Verfahren gemäß Anspruch 1 bis 3, dadurch gekennzeichnet, daß das Beschichtungsmittel als Bindemittel ein unter dem Einfluß von Feuchtigkeit aushärtbares Prepolymer mit freien Isocyanatgruppen enthält.

5. Verfahren gemäß Anspruch 1 bis 3, dadurch gekennzeichnet, daß das Beschichtungsmittel als Bindemittel ein Zweikomponenten-Polyurethan-Bindemittel enthält.

6. Verfahren gemäß Anspruch 1 bis 3, dadurch gekennzeichnet, daß das Beschichtungsmittel als Bindemittel organisch gelöste, physikalisch trocknende, filmbildende Polyurethane in Kombination mit organischen Polyisocyanaten als Vernetzer enthält.

7. Verfahren gemäß Anspruch 1 bis 6, dadurch gekennzeichnet, daß es sich bei dem zu lackierenden Substrat um kristallines, gegebenenfalls EPDM-modifiziertes Polypropylen oder Polyethylen handelt.

8. Verwendung von chemisch modifiziertem, kristallinem, chlorfreiem Polyolefin, welches eine mittleren Molmasse von 1.000 bis 8.000 g/Mol, eine Uneinheitlichkeit von 1,0 bis 6,5 und einen Gehalt an Stickstoff, Sauerstoff, Schwefel und/oder Silicium in Form von chemisch eingebauten funktionellen Gruppen von insgesamt 1,5 bis 17,5 Gew.-% aufweist, als Haftvermittler in Beschichtungsmitteln für Kunststoffe auf Basis von ein- oder zweikomponentigen Bindemitteln.

9. Gemäß Anspruch 1 bis 7 lackierte Kunststoffe.
